# EUROPÄISCHE PATENTSCHRIFT

(11) **EP 0 543 077 B1**
(45) Veröffentlichungstag und Bekanntmachung des Hinweises auf die Patenterteilung: **08.11.1995**
(21) Anmeldenummer: 92106310.3
(22) Anmeldetag: 11.04.1992
(51) Int. Cl.: C03C 17/36, G02B 1/10

(54) **Verfahren zum Herstellen von Scheiben mit hohem Transmissionsverhalten im sichtbaren Spektralbereich und mit hohem Reflexionsverhalten für Wärmestrahlung sowie durch das Verfahren hergestellte Scheiben**
Method for the production of sheets with a high transmissivity in the visible spectrum and a high reflectivity for heat rays, and sheets made by this method
Procédé de fabrication de feuilles avec une transmissivité dans le spectre visible et une réflexivité pour la chaleur rayonnante élevées et feuilles fabriquées selon ce procédé

(30) Priorität: 30.10.1991 DE 4135701
(43) Veröffentlichungstag der Anmeldung: 26.05.1993
(73) Patentinhaber: Balzers und Leybold Deutschland Holding Aktiengesellschaft, 63450 Hanau (DE)
(72) Erfinder: Szczyrbowski, Joachim, Dr., W-8758 Goldbach (DE); Braatz, Christoph, W-6452 Hainburg 2 (DE); Zmelty, Anton, W-8759 Hösbach (DE)

(56) Entgegenhaltungen:
- EP-A- 0 233 003
- DD-A- 288 822
- DE-A- 3 941 046
- US-A- 4 790 922

## Beschreibung

Die Erfindung betrifft eine Scheibe mit hohem Transmissionsverhalten im sichtbaren Spektralbereich und mit hohem Reflexionsverhalten für Wärmestrahlung durch Beschichten von transparenten Substraten mit Hilfe von Kathodenzerstäubung.

Derartige Scheiben sollen insbesondere im Winter verhindern, daß Wärme aus einem Raum nach außen hin abgestrahlt wird. Geeignete Schichtsysteme werden im allgemeinen als "Low-e" (Low-emissivity) bezeichnet.

Ein herkömmliches Low-e-Schichtsystem besteht aus verschiedenen Kategorien von Schichten, die verschiedene Eigenschaften und auch verschiedene Aufgaben in diesem System zu erfüllen haben:
a) Im allgemeinen bildet eine elektrisch hochleitende Schicht, oft ein Metall wie Ag, Au oder Cu, mit sehr niedrigem Strahlungsemissions-Koeffizienten, die eigentliche Low-e-(Low-emissivity-)Beschichtung.
b) Da jedoch eine Metallschicht eine hohe Lichtreflexion (d. h. eine niedrige Lichttransmission) im sichtbaren Bereich aufweist, wird diese mit Hilfe von zusätzlichen transparenten Schichten entspiegelt. Eine weitere Aufgabe dieser transparenten Schichten ist es, einen erwünschten Farbton und eine hohe mechanische und chemische Beständigkeit des Systems zu gewährleisten.
c) Um die dünne Metallschicht sowohl während des Herstellungsprozesses als auch nach der Herstellung gegen eine aggressive Umgebungsatmosphäre zu schützen und gleichzeitig eine gute Haftfestigkeit der nächstliegenden Oxidschicht zu gewährleisten, wird auf diese Metallschicht (Ag, Au, Cu) oft eine sogenannte Blockerschicht (Barrierenschicht, Haftvermittlerschicht) aus Metall oder Suboxid aufgebracht, wobei eine herkömmliche Low-e-Beschichtung wie folgt aufgebaut ist:

   Substrat / Oxid / Ag / Blocker / Oxid

   wobei
   o das Substrat eine transparente, inorganische oder organische Glasplatte oder eine transparente, organische Folie ist,
   o die Ag-Schicht eine elektrisch leitende Schicht,
   o die Oxide die Antireflexbeschichtung bilden und
   o der Blocker die Schutzschicht für die Ag-Schicht und den Haftvermittler zur Oxidschicht bilden.

Aus der DD 288 822 ist ein Verfahren zur Herstellung eines derartigen silberhaltigen Wärmedämmschichtsystems auf Flachglas bekannt, das eine hohe Transmission für sichtbares Licht und ein hohes Reflexionsvermögen für Wärmestrahlung aufweist und bei dem die Silberschicht in dem System Oxid/Ag/Oxid durch eine metallische Zwischenschicht in einer üblichen Schichtdicke von 1 bis 5 nm aus einer TiPd-Legierung geschützt ist.

Die bekannten Low-e-Schichtsystemen reagieren jedoch sehr sensibel auf Feuchtigkeit, besonders bei erhöhter Temperatur wie beispielsweise während der Sommermonate. Bei solchen Bedingungen agglomeriert und oxidiert die Ag-Schicht, weshalb sich auf dem Schichtsystem dann dunkle Flecken bilden. Alle bisher benutzten Metall- oder Suboxidblocker aus Metallen wie Al, Cu, Cr, Zr, Ti, Ni, Zn, Ta oder deren Legierungen schützten dabei das jeweilige Low-e-System offensichtlich nicht ausreichend gegen Korrosion.

Eine erhöhte Beständigkeit der Low-e-Beschichtung gegen NaCl ist jedoch notwendig, insbesondere wenn die hergestellten Scheiben über See transportiert werden sollen. Die hohe SO₂-Beständigkeit ist darüber hinaus erforderlich, wenn die Scheibe zum Beispiel in Gebieten mit Schwerindustrie, in denen eine sehr hohe Umweltverschmutzung mit SO₂ herrscht, benutzt werden soll.

Schließlich sind die bisher bekannten Low-e-Beschichtungen mechanisch weich, wobei ihre chemische Beständigkeit besonders gegen Feuchtigkeit (z.B. NaCl- oder SO₂-Wasserlösungen) unbefriedigend ist. Einige bekannte Schichtsysteme (US 4,413,877, DE 33 07 661, EP 0 158 318, EP 0 226 993, US 4,786,563) werden erfahrungsgemäß nach zwei Stunden unter Testbedingungen, die in DIN 50021 (NaCl-Test) oder DIN 50018 (SO₂-Test) definiert sind, vollkommen zerstört.

Bekannt sind auch Low-e-Schichtsysteme, die zwar befriedigende Beständigkeit gegenüber Feuchtigkeit besitzen (EP 0 304 234, US 4,985,312); keines dieser Schichtsysteme ist jedoch ausreichend beständig gegen NaCl-Wasserlösung oder gegen SO₂-Wasserlösung (wie in den Normen DIN 50021 und DIN 50018 festgelegt).

Aufgabe der vorliegenden Erfindung ist es nun, ein Low-e-Schichtsystem mit einer sehr hohen Beständigkeit gegenüber Feuchtigkeit und gegenüber chemischen Angriffen zu schaffen.

Diese Aufgabe wird erfindungsgemäß durch eine der Ag- oder Cu-Schicht unmittelbar vorgeschaltete und/oder unmittelbar nachgeschaltete Blockerschicht, bestehend aus einer Doppelschicht mit einer ersten der Ag- oder Cu-Schicht anliegenden Teilschicht aus Pt und/oder Pd mit einer Dicke von 0.2 bis 0,5 nm und einer zweiten Teilschicht aus Ti und/oder Cr oder einer Legierung mit mindestens 15 at % von einem dieser Elemente mit einer Dicke von 0,5 bis 5,0 nm gelöst.

Ein solches Schichtsystem ist mit Vorteil folgendermaßen aufgebaut:

Substrat / Oxid / Ag / Pd / Ti / Oxid

wobei die einzelnen Schichtdicken bevorzugt folgende Werte haben: erste Oxidschicht ca. 40 nm, Ag-Schicht ca. 9 nm, Pd-Schicht ca. 0,5 nm, Ti-Schicht ca. 1 nm, und die letzte Oxidschicht ca. 38 nm.

Überraschenderweise hat sich gezeigt, daß ein solcher Blocker einen sehr guten Haftvermittler zwischen Ag und Oxidschicht darstellt. Weiterhin hat sich gezeigt, daß ein Low-e-Schichtsystem mit dem obengenannten Blocker sehr beständig gegen Feuchtigkeit NaCl- und SO₂-Wasserlösung ist.

Scheiben nach der Erfindung lassen sich dadurch herstellen, daß die Schichten im Vakuum mit Hilfe der Magnetron-Kathodenzerstäubung aufgebracht werden. Dieses Verfahren ermöglicht beim Einsatz von Durchlaufanlagen die Beschichtung großer Glasscheiben besonders wirtschaftlich.

Dabei ist die Herstellung der Metalloxidschichten durch reaktive Magnetron-Kathodenzerstäubung von metallischen oder Legierungstargets in einer sauerstoffhaltigen Atmosphäre durchführbar. Die metallischen Schichten werden durch Zerstäubung in einer sauerstofffreien Atmosphäre aufgebracht. Für geringfügige Modifikationen der optischen Schichteigenschaften kann es allerdings vorteilhaft sein, der Beschichtungsatmosphäre kleine Mengen an Sauerstoff zuzusetzen.

Weitere Einzelheiten und Merkmale sind in den Patentansprüchen näher beschrieben und gekennzeichnet.

Die Erfindung läßt die verschiedensten Ausführungsmöglichkeiten zu; einige davon sind anhand einiger Ausführungsbeispiele beschrieben.

### Beispiel 1

In einer Sputteranlage, die mit einer Beschichtungseinrichtung für Magnetron-Kathodenzerstäubung ausgerüstet ist, wurden auf eine Float-Glasscheibe von 2 mm Dicke im Format 50 x 50 mm nacheinander folgende Schichten aufgebracht:
o eine ZnO-Schicht durch reaktive Zerstäubung eines Zn-Targets in Argon-Sauerstoff-Atmosphäre bei einem Druck von 4 x 10⁻³ mbar in einer Dicke von ca. 40 nm
o eine Ag-Schicht der Dicke 9 nm durch Zerstäubung eines Ag-Targets in Argon-Atmosphäre bei einem Druck von 3 x 10⁻³ mbar
o eine Pd-Schicht der Dicke 0,3 nm durch Zerstäubung eines Pd-Targets in Argon-Atmosphäre bei einem Druck von 3 x 10⁻³ mbar
o eine Ti-Schicht der Dicke 1,5 nm durch Zerstäubung eines Ti-Targets in Argon-Atmosphäre bei einem Druck von 3 x 10⁻³ mbar
o eine SnYbO₂-Schicht durch reaktive Zerstäubung eines SnYb-Targets in Argon-Sauerstoff-Atmosphäre bei einem Druck von 4 x 10⁻³ mbar in einer Dicke von ca. 38 nm

### Beispiel 2

In einer Sputteranlage des gleichen Typs wurden auf eine Float-Glasscheibe von 2 mm Dicke im Format 50 x 50 mm nacheinander folgende Schichten aufgebracht:
o eine SnYbO₂-Schicht durch reaktive Zerstäubung eines SnYb-Targets in Argon-Sauerstoff-Atmosphäre bei einem Druck von 4 x 10⁻³ mbar in einer Dicke von ca. 40 nm
o eine Ag-Schicht der Dicke 9 nm durch Zerstäubung eines Ag-Targets in Argon-Atmosphäre bei einem Druck von 3 x 10⁻³ mbar
o eine Pd-Schicht der Dicke 0,3 nm durch Zerstäubung eines Pd-Targets in Argon-Atmosphäre bei einem Druck von 3 x 10⁻³ mbar
o eine Ti-Schicht der Dicke 1,5 nm durch Zerstäubung eines Ti-Targets in Argon-Atmosphäre bei einem Druck von 3 x 10⁻³ mbar
o eine SnYbO₂-Schicht durch reaktive Zerstäubung eines SnYb-Targets in Argon-Sauerstoff-Atmosphäre bei einem Druck von 4 x 10⁻³ mbar in einer Dicke von ca. 38 nm

### Beispiel 3

In einer Sputteranlage des gleichen Typs wurden auf eine Float-Glasscheibe von 2 mm Dicke im Format 50 x 50 mm nacheinander folgende Schichten aufgebracht:
o eine SnYbO₂-Schicht durch reaktive Zerstäubung eines SnYb-Targets in Argon-Sauerstoff-Atmosphäre bei einem Druck von 4 x 10⁻³ mbar in einer Dicke von ca. 40 nm
o eine Ti-Schicht der Dicke 0,7 nm durch Zerstäubung eines Ti-Targets in Argon-Atmosphäre bei einem Druck von 3 x 10⁻³ mbar
o eine Pd-Schicht der Dicke 0,3 nm durch Zerstäubung eines Pd-Targets in Argon-Atmosphäre bei einem Druck von 3 x 10⁻³ mbar
o eine Ag-Schicht der Dicke 9 nm durch Zerstäubung eines Ag-Targets in Argon-Atmosphäre bei einem Druck von 3 x 10⁻³ mbar
o eine Pd-Schicht der Dicke 0,3 nm durch Zerstäubung eines Pd-Targets in Argon-Atmosphäre bei einem Druck von 3 x 10⁻³ mbar
o eine Ti-Schicht der Dicke 1,5 nm durch Zerstäubung eines Ti-Targets in Argon-Atmosphäre bei einem Druck von 3 x 10⁻³ mbar
o eine SnYbO₂-Schicht durch reaktive Zerstäubung eines SnYb-Targets in Argon-Sauerstoff-Atmosphäre bei einem Druck von 4 x 10⁻³ mbar in einer Dicke von ca. 38 nm

Die hergestellten Schichtsysteme wurden anschließend auf Feuchtigkeit, NaCl- und SO₂-Beständigkeit getestet. Die Prozeduren der einzelnen Tests sind wie folgt:

### Salzsprühtest

Test nach DIN 50021 bzw. ASTM B-117-79. Die Proben werden einem indirekten Salznebel mit 5 % NaCl ausgesetzt. Die Temperatur der Lösung beträgt 25° C, die der Kammer 35° C. Die Testdauer beträgt 24 Stunden.

### SO₂-Test

Test nach DIN 50018. Bei diesem Test werden 0,2 Liter SO₂ in 2 Liter destilliertem Wasser gelöst. Die Proben werden dieser Atmosphäre 8 Stunden bei einer Temperatur von 40° C ausgesetzt. Danach bleiben die Proben für weitere 16 Stunden in der geöffneten Probenkammer, um auf Raumtemperatur abzukühlen.

### Feuchtlagerungstest

In diesem Test werden die Proben 48 Stunden einer Temperatur von 55° C und einer relativen Luftfeuchtigkeit von 85 % ausgesetzt. Ausgehend von Raumklima werden diese Bedingungen in einer halben Stunde erreicht. Testgerät ist ein Klimaschrank der Firma Heraeus Vötsch.

Die Ergebnisse wurden nach folgender Benotung ausgewertet:

### Salzsprühtest und SO₂-Test

1 kein Angriff
2 Schädigung unter 1 % (S < 1 %)
3 Schädigung von 1 - 5 % (1 % < S < 5 %)
4 Schädigung von 5 - 25 % (5 % < S < 25 %)
5 Schicht noch vorhanden, aber leicht abwischbar
6 Schicht läßt sich mit Wasser abspülen

### Feuchtlagerungstest

1 kein Angriff
2 Schädigung unter 1 % (S < 1 %)
3 Schädigung von 1 - 5 % (1 % < S < 5 %)
4 Schädigung von 5 - 25 % (5 % < S < 25 %)
5 Schädigung von 25 - 50 % (25 % < S < 50 %)
6 Schädigung mehr als 50 % (50 % < S)

Die Ergebnisse sind in der nachstehenden Tabelle dargestellt:

| Schicht | | | | | | | | T_{y} (%) | Beständigkeit | | |
|---|---|---|---|---|---|---|---|---|---|---|---|
| Nr. | Oxid | Blocker | | Ag | Blocker | | Oxid | | Feuchtigk. | NaCl | SO₂ |
| 1 | ZnO | - | - | Ag | Pd | Ti | SnYbO₂ | 85,5 | 1,2 | 1,3 | 6,0 |
| 2 | SnYbO₂ | - | - | Ag | Pd | Ti | SnYbO₂ | 85,0 | 1,5 | 6,0 | 6,0 |
| 3 | SnYbO₂ | Ti | Pd | Ag | Pd | TI | SnYbO₂ | 84,0 | 1,0 | 1,0 | 1,4 |

| Vergleichsproben | | | | | | | | | | | |
|---|---|---|---|---|---|---|---|---|---|---|---|
| 4 | ZnO | - | - | Ag | Ti | - | ZnO | 86,0 | 1,9 | 4,0 | 6.0 |
| 5 | ZnO | - | - | Ag | Ti | - | SnYbO₂ | 86,0 | 4,5 | 6,0 | 6.0 |
| 6 | SnYbO₂ | - | - | Ag | Ti | - | SnYbO₂ | 85,0 | 4,0 | 6,0 | 6,0 |

In der anhängenden Zeichnung ist ein Substrat S dargestellt, das durch eine Glasscheibe aus Mineralglas gebildet ist. Auf dem Substrat S befindet sich eine erste Schicht 1 mit einer Dicke von 20 bis 60 nm, die aus einem Material der Oxidgruppe ZnO, SnO₂, In₂O₃, TiO₂, ZrO₂, Ta₂O₅, SiO₂, Al₂O₃ oder deren Mischungen oder aus einem der Nitride AlN; Si₃N₄ oder deren Mischungen oder aus Aluminium-, Titan-, Zirkon- oder Siliziumoxinitrid oder deren Mischungen besteht.

Auf diese Schicht ist eine zweite Schicht 2 aus einem der Metalle Ag, Cu oder deren Mischungen mit einer Dicke von 5 bis 30 nm aufgebracht.

Auf diese Schicht ist eine dritte Schicht 3 aus einem der Metalle Pd oder Pt oder deren Mischungen mit der Dicke von 0,2 bis 5 nm aufgebracht.

Auf diese dritte Schicht ist wiederum eine vierte Schicht 4 aufgebracht, die als metallische oder suboxidische Schicht aus einem der Metalle Ti, Cr oder deren Mischung oder einer Legierung mit mindestens 15 % von einem der Metalle mit der Dicke von 0,5 bis 5 nm gebildet ist.

Schließlich ist auf die vierte Schicht eine fünfte Schicht 5 aus einem Material, das der ersten Schicht 1 entspricht, aufgebracht.

Sämtliche Schichten 1 bis 5 sind durch ein Kathodenzerstäubungsverfahren aufgebracht, das - für sich genommen - zum Stand der Technik gehört.

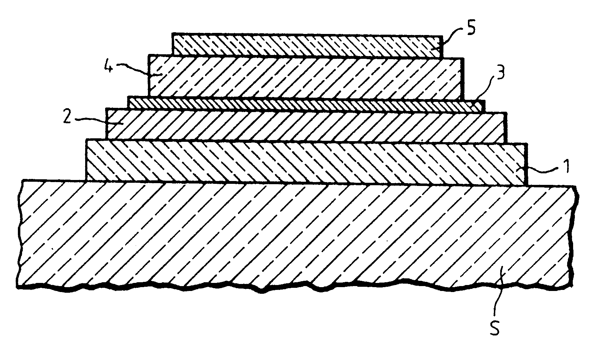

## Patentansprüche

1. Scheibe mit hohem Transmissionsverhalten im sichtbaren Spektralbereich und mit hohem Reflexionsverhalten für Wärmestrahlung durch Beschichtung von transparenten Substraten mit Hilfe von Kathodenzerstäubung,
mit einer ersten Schicht aus einem Material der Oxidgruppe ZnO, SnO₂, In₂O₃, TiO₂, Ta₂O₅, Al₂O₃ oder deren Mischungen oder aus einem der Nitride AlN, Si₃N₄ oder deren Mischungen oder aus Aluminium-, Titan-, Zirkon- oder Siliziumoxinitrid oder deren Mischungen mit einer Dicke von 20 nm bis 60 nm,
einer weiteren Schicht aus einem der Metalle Ag, Cu oder deren Mischungen mit einer Dicke von 5 bis 30 nm und
einer Deckschicht aus einem Material das der ersten Schicht entspricht
**gekennzeichnet durch** eine der Ag- oder Cu-Schicht unmittelbar vorgeschaltete und/oder unmittelbar nachgeschaltete Blockerschicht, bestehend aus einer Doppelschicht mit einer ersten der Ag- oder Cu-Schicht anliegenden Teilschicht aus Pt und/oder Pd mit einer Dicke von 0,2 bis 5 nm und
einer zweiten Teilschicht aus Ti und/oder Cr oder einer Legierung mit mindestens 15 Atom % von einem dieser Elemente mit einer Dicke von 0,5 bis 5 nm

2. Scheibe nach Anspruch 1, **dadurch gekennzeichnet**, daß die Oxidschicht in reaktiver Atmosphäre aus Neutralgas - vorzugsweise Argon (Ar) - und Sauerstoff (O₂), die Nitridschichten in reaktiver Atmosphäre aus Neutralgas - vorzugsweise Argon (Ar) - und Stickstoff (N₂), die Oxidnitridschichten in reaktiver Atmosphäre aus Neutralgas - vorzugsweise Argon (Ar) -, Sauerstoff (O₂) und Stickstoff (N₂) und die Metallschichten in einer neutralen Atmosphäre - vorzugsweise Argon (Ar) - aufgebracht sind.

3. Scheibe nach Anspruch 1, **dadurch gekennzeichnet**, daß die Oxidschichten aus SnO₂ und In₂O₃ oder deren Mischoxide mit Gehalt an Mg- oder Al- oder Pt- oder Ti- oder Y- oder Zr- oder Ta-Oxid von 0 bis 20 at% oder eines der Oxide der Elemente mit der Ordnungszahl 57 bis 71 der Periodentabelle aus einem Bereich von 0 bis 5 at% gebildet sind.

4. Scheibe nach Anspruch 1, **dadurch gekennzeichnet**, daß die ZnO-Schicht mit einem Gehalt von Al-Oxid von 0 bis 10 at% gebildet ist.

5. Scheibe nach Anspruch 1, **dadurch gekennzeichnet**, daß die Schichten durch Kathodenzerstäubung aufgebracht sind.

6. Scheibe nach Anspruch 1, **dadurch gekennzeichnet**, daß die Schichten aus einem Metalltarget gesputtert werden.

7. Scheibe nach Anspruch 1, **dadurch gekennzeichnet**, daß die Oxidschichten aus der Gruppe ZnO, SnO₂ und In₂O₃ oder deren Mischoxide aus einem Target aus Metall oder Metallegierung der Basiselemente mit einer Beimischung von Elementen mit der Ordnungszahl 57 bis 71 der Periodentabelle und mit einem Gehalt von Al gesputtert werden.

8. Scheibe nach Anspruch 1, **dadurch gekennzeichnet**, daß das Substrat eine transparente inorganische Glasplatte ist.

9. Scheibe nach Anspruch 1, **dadurch gekennzeichnet**, daß das Substrat eine transparente organische Glasplatte ist.

10. Scheibe nach Anspruch 1, **dadurch gekennzeichnet**, daß das Substrat eine transparente organische Folie ist.

## Claims

1. A sheet with a high degree of transmissivity in the visible spectral range and with a high degree of reflectivity for thermal radiation by the coating of transparent substrates with the aid of cathode sputtering comprising:
a first layer composed of a material from the oxide group ZnO, SnO₂, In₂O₃, TiO₂, Ta₂O₅, Al₂O₃ or mixtures thereof or one of the nitrides AlN, Si₃N₄ or mixtures thereof or aluminium-, titanium-, zirconium- or silicon oxynitride or mixtures thereof with a thickness of 20 nm to 60 nm,
a further layer composed of one of the metals Ag, Cu or mixtures thereof with a thickness of 5 to 30 nm and a covering layer consisting of a material corresponding to the first layer,
characterised by a blocker layer which is arranged directly before and/or directly following the Ag- or Cu- layer, consisting of a double layer comprising a first sub-layer of Pt and/or Pd with a thickness of 0.2 to 5 nm adjacent to the Ag or Cu layer and
a second sub-layer of Ti and/or Cr or an alloy containing at least 15 atom % of one of these elements with a thickness of 0.5 to 5 nm.

2. A sheet as claimed in Claim 1, characterised in that the oxide layer is applied in a reactive atmosphere composed of neutral gas - preferably argon (Ar) - and oxygen (O₂), the nitride layers are applied in a reactive atmosphere composed of neutral gas - preferably argon (Ar) - and nitrogen (N₂), the oxynitride layers are applied in a reactive atmosphere composed of neutral gas - preferably argon (Ar) -, oxygen (O₂) and nitrogen (N₂), and the metal layers are applied in a neutral atmosphere - preferably argon (Ar).

3. A sheet as claimed in Claim 1, characterised in that the oxide layers are formed from SnO₂ and In₂O₃ or their mixed oxides having a content of Mg- or Al- or Pt- or Ti- or Y- or Zr- or Ta- oxide of 0 to 20 at% or one of the oxides of the elements with the atomic number 57 to 71 of the Periodic Table from a range of 0 to 5 at%.

4. A sheet as claimed in Claim 1, characterised in that the ZnO layer is formed with a content of Al-oxide of 0 to 10 at%.

5. A sheet as claimed in Claim 1, characterised in that the layers are applied by cathode sputtering.

6. A sheet as claimed in Claim 1, characterised in that the layers are sputtered from a metal target.

7. A sheet as claimed in Claim 1, characterised in that the oxide layers from the group ZnO, SnO₂ and In₂O₃ or their mixed oxides are sputtered from a target composed of metal or a metal alloy of the base elements with an addition of elements with the atomic number 57 to 71 of the Periodic Table and with a content of Al.

8. A sheet as claimed in Claim 1, characterised in that the substrate is a transparent, inorganic glass plate.

9. A sheet as claimed in Claim 1, characterised in that the substrate is a transparent, organic glass plate.

10. A sheet as claimed in Claim 1, characterised in that the substrate is a transparent, organic film.

## Revendications

1. Vitre à haut comportement de transmission dans le domaine spectral visible et à haut comportement de réflexion pour le rayonnement thermique par revêtement de substrats transparents par pulvérisation cathodique, comportant une première couche constituée par un matériau du groupe des oxydes ZnO, SnO₂, In₂O₃, TiO₂, Ta₂O₅, Al₂O₃ ou leurs mélanges ou par l'un des nitrures AlN, Si₃N₄ ou leurs mélanges ou par un oxynitrure d'aluminium, de titane, de zirconium ou de silicium ou leurs mélanges, d'une épaisseur de 20 nm à 60 nm,
une autre couche constituée par l'un des métaux Ag, Cu ou leurs mélanges, d'une épaisseur de 5 à 30 nm et
une couche de couverture constituée par un matériau qui correspond à celui de la première couche,
caractérisée par une couche de blocage précédant immédiatement et/ou suivant immédiatement la couche de Ag ou de Cu, consistant en une double couche comportant une première couche partielle adjacente à la couche de Ag ou de Cu, constituée par Pt et/ou Pd, d'une épaisseur de 0,2 à 5 nm et
une seconde couche partielle constituée par Ti et/ou Cr ou un alliage contenant au moins 15% atomique de l'un de ces éléments, d'une épaisseur de 0,5 à 5 nm.

2. Vitre selon la revendication 1, caractérisée en ce que la couche d'oxyde est appliquée dans une atmosphère réactive constituée par un gaz neutre, de préférence l'argon (Ar), et l'oxygène (O₂), les couches de nitrure sont appliquées dans une atmosphère réactive constituée par un gaz neutre, de préférence l'argon (Ar), et l'azote (N₂), les couches d'oxynitrure sont appliquées dans une atmosphère réactive constituée par un gaz neutre, de préférence l'argon (Ar), l'oxygène (O₂) et l'azote (N₂) et les couches métalliques sont appliquées dans une atmosphère neutre, de préférence l'argon (Ar).

3. Vitre selon la revendication 1, caractérisée en ce que les couches d'oxyde sont constituées par SnO₂ et In₂O₃ ou leurs oxydes mixtes avec une teneur en oxyde de Mg ou de Al ou de Pt ou de Ti ou de Y ou de Zr ou de Ta de 0 à 20% atomique ou en l'un des oxydes des éléments de nombre atomique 57 à 71 du tableau périodique dans un domaine de 0 à 5% atomique.

4. Vitre selon la revendication 1, caractérisée en ce que la couche de ZnO est formée avec une teneur d'oxyde de Al de 0 à 10% atomique.

5. Vitre selon la revendication 1, caractérisée en ce que les couches sont appliquées par pulvérisation cathodique.

6. Vitre selon la revendication 1, caractérisée en ce que les couches sont appliquées par pulvérisation à partir d'une cible métallique.

7. Vitre selon la revendication 1, caractérisée en ce que les couches d'oxyde du groupe de ZnO, SnO₂ et In₂O₃ ou leurs oxydes mixtes sont appliquées par pulvérisation à partir d'une cible de métal ou d'alliage métallique des éléments de base avec addition d'éléments de nombre atomique 57 à 71 du tableau périodique et avec une teneur en Al.

8. Vitre selon la revendication 1, caractérisée en ce que le substrat est une plaque de verte inorganique transparente.

9. Vitre selon la revendication 1, caractérisée en ce que le substrat est une plaque de verte organique transparente.

10. Vitre selon la revendication 1, caractérisée en ce que le substrat est une feuille organique transparente.
